# EUROPEAN PATENT SPECIFICATION

(11) **EP 2 656 310 B1**
(45) Date of publication and mention of the grant of the patent: **02.03.2016**
(21) Application number: 11797330.5
(22) Date of filing: 20.12.2011
(51) Int. Cl.: G06T 7/20

(54) **METHOD FOR PRODUCING A PANORAMIC IMAGE AND IMPLEMENTATION APPARATUS**
VERFAHREN ZUR ERZEUGUNG EINES PANORAMABILDES UND IMPLEMENTIERUNGSVORRICHTUNG
PROCÉDÉ POUR PRODUIRE UNE IMAGE PANORAMIQUE ET APPAREIL DE MISE EN OEUVRE

(30) Priority: 20.12.2010 FR 1060837
(43) Date of publication of application: 30.10.2013
(73) Proprietor: ST-Ericsson SA, 1228 Plan-les-Ouates (CH)
(72) Inventor: AUBERGER, Stéphane, F-93160 Noisy-le-Grand (FR); HANUS, Nicolas, F-73160 Vimines (FR)
(74) Representative: Zapalowicz, Francis
(86) International application number: PCT/EP2011/073321
(87) International publication number: WO 2012/084883

(56) References cited:
- EP-A1- 1 376 471
- US-A1- 2008 080 742
- YONGMIN LI ET AL.: "Robust Panorama from MPEG Video", MULTIMEDIA AND EXPO, 2003. ICME '03. PROCEEDINGS, 6 July 2003 (2003-07-06), pages 81-84, XP007918751,
- QUANG VINH TRUONG ET AL: "Classification-based motion vector processing for motion compensated frame interpolation using block boundary distortion metric", COMPUTER AND AUTOMATION ENGINEERING (ICCAE), 2010 THE 2ND INTERNATIONAL CONFERENCE ON, IEEE, PISCATAWAY, NJ, USA, 26 February 2010 (2010-02-26), pages 488-491, XP031660738,

## Description

The invention relates to the production of a panoramic image on the basis of consecutive images extracted from a video sequence, and more particularly to the alignment of images comprising scenes with several levels of field depth.

A panoramic image is an image possessing an exceptionally wide field. These panoramic images may be created with a panoramic photographic apparatus comprising objectives with an exceptionally wide field, or else on the basis of the recording of a succession of images by a picture-taking apparatus by swivelling the latter in relation to a horizontal axis. They can thus be aligned on the basis of a digital photographic apparatus and of software making it possible to assemble several pictures, or else on the basis of a video sequence recorded by a video camera on the basis of which use is made of images of the video sequence assembled.

In the case of a digital photographic apparatus in a photographic capture mode, several successive pictures are taken with a photographic apparatus fixed on an axis and which turns between each picture, causing two consecutive pictures to overlap. Software thereafter makes it possible to assemble the various images obtained. The field of view is widened artificially in this way.

In the case of producing a panoramic image on the basis of a video sequence, a video sequence is firstly recorded by carrying out a panoramic pan, that is to say by performing a swivel motion about a fixed axis. The images of the video sequence are, for example, recorded at a frequency of 25 images per second. The images thus captured during the video sequence will serve to construct a panoramic photographic image.

To construct a panoramic image on the basis of a video sequence, it is necessary firstly to estimate the displacement existing between two successive images. This estimation of displacement makes it possible to determine a displacement vector of an image with respect to a previous image. This displacement vector then makes it possible to correctly align the two successive images within a panoramic image. Estimation of displacement is well known and is based on a method of agreement between the blocks defining the image, which works on the basis of the luminance of the various input images.

The displacement vector is thus deduced on the basis of several displacement vectors of blocks of an image. These blocks correspond to small square zones on the image.

Once the image undergoing analysis has been well aligned, a part of the latter is merged with the panoramic image already formed on the basis of the previous images. In a general case, the part of the analysed image which is mixed with the panoramic image corresponds to a central zone of this image to be analysed, since the distortions are tiny in this zone. Indeed, the distortions due, for example, to a wide angle objective or to other possibilities, generally appear on the boundaries of the image.

When a captured image comprises several objects situated at different field depths, as in the case, for example, of a foreground person and of a background landscape, problems appear in the creation of a panoramic photographic image.

Indeed, the motion of the camera is in general modelled by a pan rotation motion, but this motion is not applicable to the whole of the image even though it remains a very good approximation for objects with large field depth. In the presence of a foreground, the motion of the camera customarily comprises a translation past the captured scene. In this case, the foreground has a more significant apparent displacement than that of the background. Consequently, the various displacement vectors of the blocks of the analysed image are not homogeneous. And if the foreground occupies less space than the background, as is generally the case, the displacement vector of the target image will compensate the motion of the background much better than the motion of the foreground.

Therefore, the foreground object will not be correctly aligned and will ultimately appear with a certain distortion and a misalignment of the mixing zone will also be observed, creating blur or a double-boundary artefact.

The article from Tongmin Li et al. entitled "Robust Panorama from MPEG Video" published in Multimedia and expo, 2003, ICME '03, Proceedings, 6 July 2003, in pages 81-84, XP007918751 depicts a method for aligning two consecutive images of a video sequence for the production of a panoramic image, comprising a correction of a displacement vector of a target image of a video sequence, the target image being composed of distinct blocks, and said displacement vector being deduced from several displacement vectors of the blocks of the target image.

The invention is aimed at alleviating these drawbacks by favouring the displacement vectors of the blocks of the zone of merging with the panoramic photographic image for the determination of the displacement vector of the image.

According to one aspect, there is proposed in one embodiment, a method for aligning two consecutive images of a video sequence for the production of a panoramic image.

This method comprises a correction of a displacement vector of a target image of a video sequence, the target image being composed of distinct blocks, the said displacement vector being deduced from several images of displacement of the blocks of the target image.

Preferably, the method comprises:
- a determination of a mean vector in which an average of the displacement vectors of the blocks of a central region of the target image is calculated;
- a comparison of the mean vector with the displacement vector of the target image;
- a modification of the displacement vector of the target image.

Preferably, the method can comprise a determination of the variance of the average of the displacement vectors of the blocks of a central region of the target image.

Advantageously, the correction can comprise a replacement of the displacement vector of the target image with the mean vector.

The replacement preferably takes place if the difference between the displacement vector of the target image and the mean vector is less than a first threshold and if the variance of the said average is less than a second threshold.

The central region of the target image can advantageously correspond to the region of merging of the target image with a previous image.

In this instance a previous image can correspond to a panoramic image already constructed on the basis of the previous images of the pan.

According to another aspect, there is proposed in one embodiment, an apparatus furnished with digital picture-taking means, comprising means for aligning two consecutive images of a video sequence for the production of a panoramic image.

The apparatus comprises means for correcting a displacement vector of a target image of a video sequence, the target image being composed of distinct blocks, the said displacement vector being deduced by means for estimating the displacement vector of an image on the basis of the means for estimating the displacement vectors of the blocks of the target image.

Preferably, the correction means comprise:
- means for determining a mean vector which are able to calculate an average of the displacement vectors of blocks of a central region of the target image;
- comparison means able to compare the said mean vector with the displacement vector of the target image;
- modification means able to correct the displacement vector of the target image.

The correction means can advantageously comprise means for determining a variance which are able to determine the variance of the average of the displacement vectors of blocks of a central region of the target image.

Advantageously, the correction means comprise a first comparison module able to compare the variance of the said average with a first threshold.

The comparison means advantageously comprise a subtraction module able to calculate the difference between the displacement vector of the target image and the mean vector, and a second comparison module able to compare the difference with a second threshold.

The modification means preferably comprise replacement means able to replace the displacement vector of the target image with the mean vector.

Other advantages and characteristics of the invention will be apparent on examining the detailed description of wholly non-limiting embodiments and modes of implementation, and the appended drawings in which:
- Figure 1 represents a schematic explanation of the problem encountered in respect of the construction of a panoramic image comprising objects with various field depths;
- Figure 2 represents a flowchart of a method for aligning two successive images of a video sequence for the production of a panoramic image according to one mode of implementation; and
- Figure 3 represents an apparatus comprising digital photography means comprising means for aligning two successive images of a video sequence for the production of a panoramic image according to one embodiment.

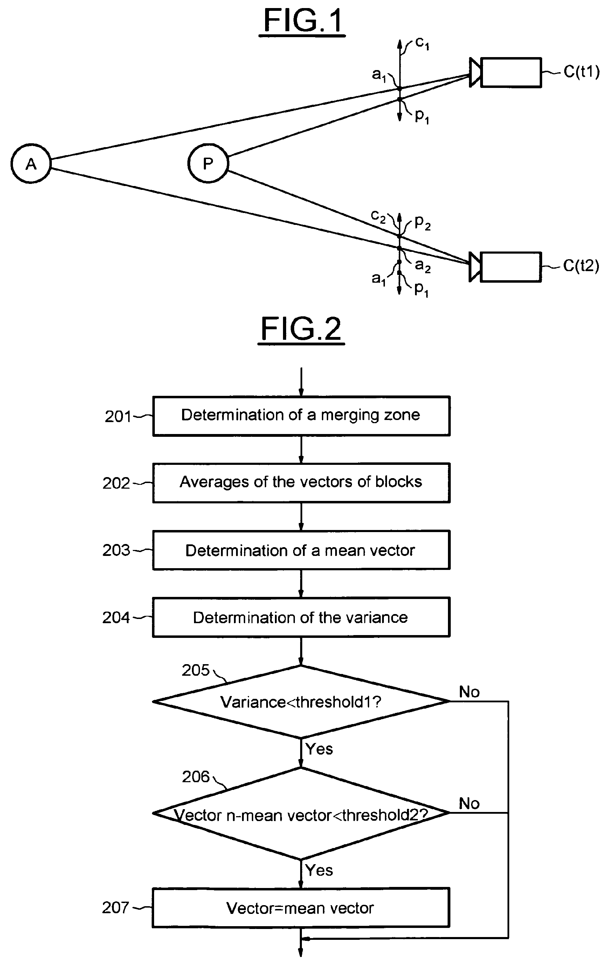

In Figure 1 is represented a schematic explanation of the problem encountered in respect of the production of a panoramic image on the basis of images extracted from a video sequence comprising objects with various field depths.

In the figure has been represented a first background object A and a second foreground object P, the two objects being filmed by means C for recording a video sequence, such as a digital photographic apparatus in video mode or a camera, in translation over the course of time. The means C is represented at a first instant t₁, identified by the reference C(t₁), and at a second instant t₂, identified by the reference C(t₂), subsequent to the first instant t₁.

At the first instant t₁ has been tagged the position "a₁" of the background object A and the position "p₁" of the foreground object P on the field of the camera "c₁". The camera is then translated, in this example, to a second position at the second instant t₂. The position "a₂" of the background object A and the position "p₂" of the foreground object P have also been marked on the field "c₂" of the camera C for this instant t₂.

The positions "a₁" and "p₁" of the two objects A and P have also been plotted at the previous instant t₁ on the field of the camera "c₂" so as to compare the displacement of the two objects on the field of the camera between the first instant t₁ and the second instant t₂. It is thus observed that the displacement of the background object A is much smaller than the displacement observed for the foreground object P.

The displacement vector thus determined between the two images will be different depending on whether it is determined on the basis of the foreground object P or of the background object A.

The example has been produced here for the case of a translation of the camera, for the sake of simplicity of explanation. It is obvious that in the case of a rotation of the camera C from a fixed axis, the same problem will arise.

In Figure 2 is schematically represented a flowchart of a mode of implementation of a method for aligning two successive images of a video sequence for the production of a panoramic image comprising a correction of a displacement vector of a target image of a video sequence.

In a first step 201 of the method, a central region is determined, corresponding to the zone of merging of the target image with the already existing panoramic photographic image. This merging zone corresponds to a zone of overlap of the two images. This merging zone is generally chosen at the centre of the target image since the central region of the target image is a region exhibiting the fewest possible distortions.

The target image is decomposed into matrix blocks. The central region determined comprises for example the blocks of two columns at the centre of the target image.

In a following step 202, an average of the displacement vectors of the blocks of the central region of the target image is determined.

In a following step 203, a mean vector, corresponding to the mean displacement vector of the blocks of the central region of the target image, is determined on the basis of the said average.

In a following step 204, the variance of the said calculated average is also determined.

In a following step 205, the result of the variance calculated in the previous step is then compared with a first threshold, Threshold1. If the variance thus calculated is greater than this threshold, the method is exited without performing any vector correction. Indeed, if the variance of the said average is too large, this signifies that the displacement vectors of the blocks of the central region of the target image are very different from one another, and that it is not possible to be certain of the correctness of the mean vector determined on the basis of these vectors.

On the other hand, if the variance is much less than the first threshold, the difference between the displacement vector of the target image n and the mean vector calculated during step 203 is calculated in a following step 206. The displacement vector of the target image n is deduced on the basis of the displacement vectors of all the blocks of the target image. The displacement vector determined on the basis of the displacement vectors of the blocks of the whole of the image and the displacement vector determined on the basis of the displacement vectors of the blocks of the central region of the target image are thus compared.

In this same step 206, the difference thus calculated is compared with a second threshold, Threshold2. If this difference is greater than the second threshold, this method is also exited without performing any modification. Indeed, if the mean vector determined on the basis of displacement vectors of the blocks of the central region of the target image differs overly from the displacement vector of the target image determined on the basis of the displacement vectors of the blocks of the whole of the image, then it is not possible to be certain of the correctness of the mean vector. Indeed, it may happen that the central region of the target image has undergone a luminous disturbance due to an object that has appeared in this region or a luminous instability.

On the other hand, if the difference is less than the second threshold, then the replacement of the displacement vector of the target image n with the mean vector determined during step 203 is carried out in a final step 207. The difference being less than the threshold, it is considered that the two vectors do not differ overly, and it is therefore possible to correct the displacement vector of the target image n with the mean vector determined on the basis of the displacement vectors of the blocks of the central region which offers a better modelling of the displacement of the image.

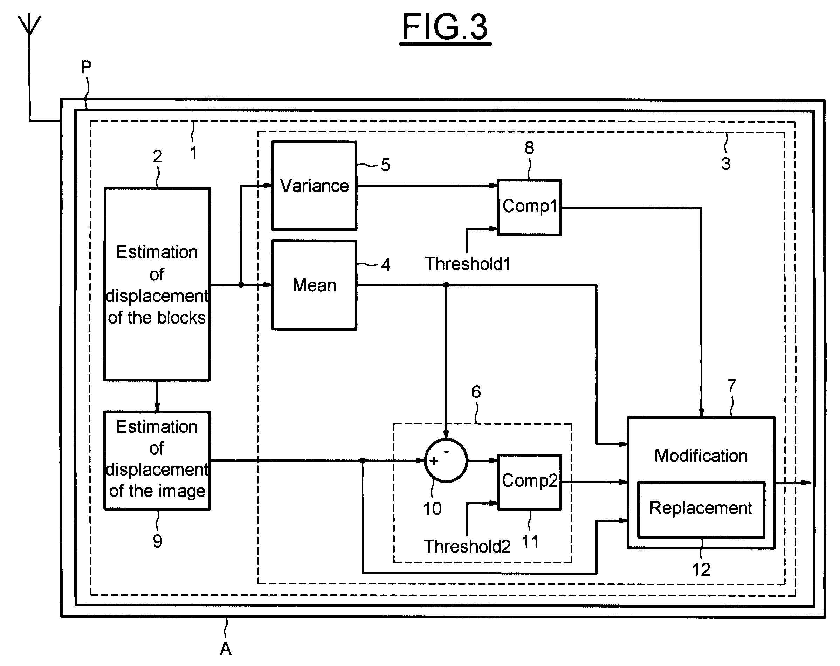

In Figure 3 is represented in a schematic manner an apparatus A, such as a mobile telephone apparatus, comprising means P for capturing digital photographic images able to record a video sequence. The means P comprise means 1 of alignment of two consecutive images of a video sequence for the production of a panoramic image.

Moreover, the alignment means 1 comprise means 2 for estimating the displacement of the blocks of the image, as well as means 9 for estimating the displacement of the image which are able to estimate the displacement vector of the target image n on the basis of the estimation of the displacement of the various blocks of the image.

The alignment means 1 also comprise means 3 of correction of a displacement vector of a target image n of a video sequence. The correction means 3 furthermore comprise means 4 for determining a mean vector, able to determine the average of the displacement vectors of the blocks of a central region of the target image and to deduce therefrom a mean vector. The correction means 3 also comprise means 5 for determining the variance which are able to determine the variance of the said average. The correction means 3 also comprise comparison means 6 able to compare the said mean vector with the displacement vector of the target image n, and modification means 7 able to correct the displacement vector of the target image n. Finally, the correction means 3 comprise a first comparison module 8 able to compare the variance of the said average determined by the means 5 with a first threshold (Threshold1).

The means 2 for estimating the displacement of the blocks of the image deliver as output the coordinates of the displacement vectors of the various blocks constituting the target image. Each block constituting the image represents a square zone of the target image.

For each block thus defined, a displacement vector is estimated by comparing the block of the target image with the corresponding block of the previous image. The displacement vectors of the blocks of the target image are thus delivered to the means 4 for determining a mean vector. The means 4 for determining the mean vector determine initially the average of the displacement vectors of the blocks of the said central region of the target image, and deduce therefrom a mean displacement vector of the image.

The estimation means 2 also deliver as output the displacement vectors of the blocks of the target image to the means 5 for determining the variance which calculate the variance of the said average on the basis of these data, that is to say the variance of the average of the coordinates of the displacement vectors of the blocks of the central region of the target image.

The mean vector thus determined by the means 4 for determining the mean vector is then delivered to a subtraction module 10 included in the comparison means 6. The subtraction module 10 also receives as input the displacement vector of the target image n, estimated by the image displacement estimation means 9. The subtraction module 10 then calculates the difference between the displacement vector of the target image and the mean vector, that is to say the difference between the coordinates of the two vectors.

The result of the subtraction thus determined is delivered as output from the subtraction module 10 to a second comparison module 11 able to compare the difference with a second threshold (Threshold2). If the result of the subtraction is greater than the second threshold, then the second comparison module 11 delivers as output a signal indicating that no modification of the displacement vector, estimated by the estimation means 9, of the target image "n" need be carried out.

On the other hand, if the result of the subtraction is greater than the second threshold, then the second comparison module 11 delivers as output a signal indicating that a modification of the displacement vector, estimated by the means 9, of the target image "n" does need to be carried out.

The modification means 7 therefore receive as input the output signal of the second comparison module 11 of the comparison means 6, the displacement vector, estimated by the estimation means 9, of the target image "n", the mean vector determined by the means for determining the mean vector 4 and the output signal of the first comparison module 8.

The first comparison module 8 therefore compares the variance determined by the means 5 with a first threshold (Thresholdl). If the variance is greater than this first threshold, then the first comparison module 8 delivers a signal as output indicating that no modification of the displacement vector of the target image "n" need be performed.

On the other hand, if the variance is less than the first threshold, the first comparison module 8 then delivers as output a signal indicating that the displacement vector of the target image "n" needs to be modified.

If the modification means 7 receive at least one signal indicating that no modification of the displacement vector of the target image "n" need be performed, then the modification means 7 deliver as output the displacement vector of the target image "n", unmodified.

On the other hand, if the modification means 7 receive a signal for modification of the displacement vector of the target image "n" at one and the same time by the first comparison module 8 and by the second comparison module 12, then the modification means 7 replace the displacement vector of the target image "n" with the mean vector determined by the means 4 for determining the mean vector, with the aid of replacement means 12 able to replace the displacement vector of the target image "n" with the mean vector. In this case, the modification means 7 deliver the mean vector as output.

This invention therefore proposes to correct the displacement vector of an image intended to be merged with another image for the production of a panoramic pan by replacing it with the mean vector corresponding to the average of the displacement vectors of the blocks of a central region of the image corresponding to the zone of merging of the image with the other image. This correction makes it possible to obtain a modelling of the image displacement that is more appropriate to objects situated in the foreground of the image, and to alleviate the problems of distortions of the objects in the foreground during the production of a panoramic image comprising objects with different field depths.

This invention makes it possible to alleviate these problems of distortions at lesser cost, in a simple manner, avoiding the use of any strategy of three-dimensional estimation of depth.

## Claims

1. Method for aligning two consecutive images of a video sequence for the production of a panoramic image, comprising a correction of a displacement vector of a target image of a video sequence, the target image being composed of distinct blocks, and the said displacement vector being deduced from several displacement vectors of the blocks of the target image, the correction occurring when several displacement vectors of the blocks of the target image are not homogeneous, **characterized in that** the correction comprises:
- a determination (203) of a mean vector in which an average of the displacement vectors of the blocks of a central region of the target image is calculated;
- a comparison of the mean vector with the displacement vector of the target image;
- a modification (207) of the displacement vector of the target image.

2. Method according to Claim 1, **characterized in that** it comprises a determination of the variance (204) of the average of the displacement vectors of the blocks of a central region of the target image.

3. Method according to either of Claims 1 and 2, **characterized in that** the modification (207) comprises a replacement of the displacement vector of the target image with the mean vector.

4. Method according to Claim 3, **characterized in that** the remplacement takes place if the difference between the displacement vector of the target image and the mean vector is less than a first threshold (205) and if the variance of the said average is less than a second threshold (206).

5. Method according to one of Claims 1 to 4, **characterized in that** the central region of the target image corresponds to the region of merging of the target image with a previous image.

6. Apparatus (A) furnished with digital picture-taking means (P), comprising means (1) for aligning two consecutive images of a video sequence for the production of a panoramic image, the apparatus comprising means (3) for correcting a displacement vector of a target image of a video sequence, the target image being composed of distinct blocks, and the said displacement vector being deduced by means (9) for estimating the displacement vector of an image on the basis of the means (2) for estimating the displacement vectors of the blocks of the target image, the correction occurring when several displacement vectors of the blocks of the target image are not homogeneous, **characterized in that** the correction means comprise:
- means (4) for determining a mean vector which are able to calculate an average of the displacement vectors of blocks of a central region of the target image;
- comparison means (6) able to compare the said mean vector with the displacement vector of the target image;
- modification means (7) able to correct the displacement vector of the target image.

7. Apparatus according to claim 6, **characterized in that** the correction means (3) comprise means (5) for determining a variance which are able to determine the variance of the average of the displacement vectors of blocks of a central region of the target image.

8. Apparatus according to one of Claims 6 or 7, **characterized in that** the corrections means (3) comprise a first comparison module (8) able to compare the variance of the said average with a first threshold.

9. Apparatus according to one of Claims 6 to 8, **characterized in that** the comparison means (6) comprise a subtraction module (10) able to calculate the difference between the displacement vector of the target image and the mean vector, and a second comparison module (11) able to compare the difference with a second threshold.

10. Apparatus according to one of Claims 6 to 9, **characterized in that** the modification means (7) comprise replacement means (12) able to replace the displacement vector of the target image with the mean vector.

## Patentansprüche

1. Verfahren zum Ausrichten von zwei aufeinanderfolgenden Bildern einer Videosequenz zum Erzeugen eines Panoramabilds, das eine Korrektur eines Verschiebefaktors eines Zielbilds einer Videosequenz umfasst, wobei das Zielbild aus einzelnen Blöcken gebildet ist und der Verschiebevektor aus mehreren Verschiebevektoren der Blöcke des Zielbilds abgeleitet wird, wobei die Korrektur erfolgt, wenn mehrere Verschiebevektoren der Blöcke des Zielbilds nicht homogen sind, **dadurch gekennzeichnet, dass** die Korrektur umfasst:
- eine Bestimmung (203) eines Mittelvektors, bei der ein Durchschnittswert der Verschiebevektoren der Blöcke einer zentralen Region des Zielbilds berechnet wird;
- einen Vergleich des Mittelvektors mit dem Verschiebevektor des Zielbilds;
- eine Modifikation (207) des Verschiebevektors des Zielbilds.

2. Verfahren nach Anspruch 1, **dadurch gekennzeichnet, dass** es eine Bestimmung der Varianz (204) des Durchschnittswerts der Verschiebevektoren der Blöcke einer zentralen Region des Zielbilds umfasst.

3. Verfahren nach einem der Ansprüche 1 und 2, **dadurch gekennzeichnet, dass** die Modifikation (207) ein Ersetzen des Verschiebevektors des Zielbilds durch den Mittelvektor umfasst.

4. Verfahren nach Anspruch 3, **dadurch gekennzeichnet, dass** das Ersetzen stattfindet, wenn die Differenz zwischen dem Verschiebevektor des Zielbilds und dem Mittelvektor kleiner als ein erster Schwellwert (205) ist und wenn die Varianz des Durchschnittswerts kleiner als ein zweiter Schwellwert (206) ist.

5. Verfahren nach einem der Ansprüche 1 bis 4, **dadurch gekennzeichnet, dass** die zentrale Region des Zielbilds der Region des Übergehens des Zielbilds in ein vorhergehendes Bild entspricht.

6. Vorrichtung (A), die mit Mitteln zur digitalen Bildaufnahme (P) ausgestattet ist, welche Mittel (1) zum Ausrichten von zwei aufeinanderfolgenden Bildern einer Videosequenz zum Erzeugen eines Panoramabilds umfassen, wobei die Vorrichtung Mittel (3) zum Korrigieren eines Verschiebevektors eines Zielbilds einer Videosequenz umfasst, wobei das Zielbild aus einzelnen Blöcken gebildet ist und der Verschiebevektor durch Mittel (9) zum Schätzen des Verschiebevektors eines Bilds auf der Basis der Mittel (2) zum Schätzen der Verschiebevektoren der Blöcke des Zielbilds abgeleitet wird, wobei die Korrektur erfolgt, wenn mehrere Verschiebevektoren der Blöcke des Zielbilds nicht homogen sind, **dadurch gekennzeichnet, dass** die Korrigiermittel umfassen:
- Mittel (4) zum Bestimmen eines Mittelvektors, die in der Lage sind, einen Durchschnittswert der Verschiebevektoren von Blöcken einer zentralen Region des Zielbilds zu berechnen;
- Vergleichsmittel (6), die in der Lage sind, den Mittelvektor mit dem Verschiebevektor des Zielbilds zu vergleichen;
- Modifiziermittel (7), die in der Lage sind, den Verschiebevektor des Zielbilds zu korrigieren.

7. Vorrichtung nach Anspruch 6, **dadurch gekennzeichnet, dass** die Korrigiermittel (3) Mittel (5) zum Bestimmen einer Varianz umfassen, die in der Lage sind, die Varianz des Durchschnittswerts der Verschiebevektoren von Blöcken einer zentralen Region des Zielbilds zu bestimmen.

8. Vorrichtung nach einem der Ansprüche 6 oder 7, **dadurch gekennzeichnet, dass** die Korrigiermittel (3) ein erstes Vergleichsmodul (8) umfassen, das in der Lage ist, die Varianz des Durchschnittswerts mit einem ersten Schwellwert zu vergleichen.

9. Vorrichtung nach einem der Ansprüche 6 bis 8, **dadurch gekennzeichnet, dass** die Vergleichsmittel (6) ein Subtraktionsmodul (10), das in der Lage ist, die Differenz zwischen dem Verschiebevektor des Zielbilds und dem Mittelvektor zu berechnen, und ein zweites Vergleichsmodul (11) umfassen, das in der Lage ist, die Differenz mit einem zweiten Schwellwert zu vergleichen.

10. Vorrichtung nach einem der Ansprüche 6 bis 9, **dadurch gekennzeichnet, dass** die Modifiziermittel (7) Ersetzmittel (12) umfassen, die in der Lage sind, den Verschiebevektor des Zielbilds durch den Mittelvektor zu ersetzen.

## Revendications

1. Procédé pour aligner deux images consécutives d'une séquence vidéo pour la réalisation d'une image panoramique, comprenant une correction d'un vecteur de déplacement d'une image cible d'une séquence vidéo, l'image cible étant composée de blocs distincts, et ledit vecteur de déplacement étant déduit à partir de plusieurs vecteurs de déplacement des blocs de l'image cible, la correction se produisant quand plusieurs vecteurs de déplacement des blocs de l'image cible ne sont pas homogènes, **caractérisé en ce que** la correction comprend :
- une détermination (203) d'un vecteur moyen dans lequel on calcule une moyenne des vecteurs de déplacement des blocs d'une région centrale de l'image cible ;
- une comparaison du vecteur moyen au vecteur de déplacement de l'image cible ;
- une modification (207) du vecteur de déplacement de l'image cible.

2. Procédé selon la revendication 1, **caractérisé en ce qu'**il comprend une détermination de la variance (204) de la moyenne des vecteurs de déplacement des blocs d'une région centrale de l'image cible.

3. Procédé selon la revendication 1 ou 2, **caractérisé en ce que** la modification (207) comprend un remplacement du vecteur de déplacement de l'image cible par le vecteur moyen.

4. Procédé selon la revendication 3, **caractérisé en ce que** le remplacement a lieu si la différence entre le vecteur de déplacement de l'image cible et le vecteur moyen est inférieure à un premier seuil (205) et si la variance de ladite moyenne est inférieure à un second seuil (206).

5. Procédé selon l'une des revendications 1 à 4, **caractérisé en ce que** la région centrale de l'image cible correspond à la région de fusion de l'image cible avec une image précédente.

6. Appareil (A) muni de moyens de prise de vues numériques (P), comprenant des moyens (1) d'alignement de deux images consécutives d'une séquence vidéo pour la réalisation d'une image panoramique, l'appareil comprenant des moyens (3) de correction d'un vecteur de déplacement d'une image cible d'une séquence vidéo, l'image cible étant composée de blocs distincts, et ledit vecteur de déplacement étant déduit par des moyens (9) d'estimation du vecteur de déplacement d'une image à partir des moyens (2) d'estimation des vecteurs de déplacement des blocs de l'image cible, la correction se produisant quand plusieurs vecteurs de déplacement des blocs de l'image cible ne sont pas homogènes, **caractérisé en ce que** les moyens de correction comprennent :
- des moyens (4) de détermination d'un vecteur moyen qui sont aptes à calculer une moyenne des vecteurs de déplacement de blocs d'une région centrale de l'image cible ;
- des moyens de comparaison (6) aptes à comparer ledit vecteur moyen au vecteur de déplacement de l'image cible ;
- des moyens de modification (7) aptes à corriger le vecteur de déplacement de l'image cible.

7. Appareil selon la revendication 6, **caractérisé en ce que** les moyens de correction (3) comprennent des moyens (5) de détermination d'une variance qui sont aptes à déterminer la variance de la moyenne des vecteurs de déplacement de blocs d'une région centrale de l'image cible.

8. Appareil selon l'une des revendications 6 et 7, **caractérisé en ce que** les moyens de correction (3) comprennent un premier module de comparaison (8) apte à comparer la variance de ladite moyenne à un premier seuil.

9. Appareil selon l'une des revendications 6 à 8, **caractérisé en ce que** les moyens de comparaison (6) comprennent un module de soustraction (10) apte à calculer la différence entre le vecteur de déplacement de l'image cible et le vecteur moyen, et un second module de comparaison (11) apte à comparer la différence à un second seuil.

10. Appareil selon l'une des revendications 6 à 9, **caractérisé en ce que** les moyens de modification (7) comprennent des moyens de remplacement (12) aptes à remplacer le vecteur de déplacement de l'image cible par le vecteur moyen.
